# EUROPEAN PATENT SPECIFICATION

(11) **EP 2 317 719 B1**
(45) Date of publication and mention of the grant of the patent: **07.06.2017**
(21) Application number: 09290836.7
(22) Date of filing: 03.11.2009
(51) Int. Cl.: H04L 29/06

(54) **Method of providing a data transmission**
Verfahren zur Bereitstellung einer Datenübertragung
Procédé de fourniture de transmission de données

(43) Date of publication of application: 04.05.2011
(73) Proprietor: ALCATEL LUCENT, 92100 Boulogne-Billancourt (FR)
(72) Inventor: Horst Roessler, 70794 Filderstadt (DE); Peter Schefczik, 91056 Erlangen (DE)
(74) Representative: Menzietti, Domenico

(56) References cited:
- US-A1- 2005 053 094
- US-A1- 2009 163 198
- US-B1- 6 591 382

## Description

The present invention relates to a method supporting a data transmission between a first node and a second node via a link of a communication network, and a network unit and a computer program product to execute said method.

Today's communication networks are burdened with data associated with a multitude of different network applications tailored for different purposes. However these different applications all use a small set of dedicated protocols to transfer the needed information to and from corresponding peers. In most cases TCP/IP is used when a reliable transfer is required, e.g. for hypertext document data, and UDP/IP is used when an unreliable transfer is tolerated, e.g. for VoIP or video data (TCP = Transmission Control Protocol; IP = Internet Protocol; UDP = User Datagram Protocol; VoIP = Voice over IP).

Today within an established communication link the routing, forwarding, resource and resilience mechanisms are often determined by the user application. On the one hand currently used transfer protocols may be able to adapt to a certain extent to changing transmission properties but only by adjusting the number of packets sent per time unit, e.g. by changing the coding scheme for packets to be transmitted. On the other hand such adjustments happen on all layers and thereby lead to unforeseen dependencies and data transfer impairments for the user application. Altogether this may lead to a non-optimal resource usage. One prominent example is TCP over a wireless link with all its problems in case the wireless link degrades

US6591382 B1 discloses a method for providing improved performance using TCP/IP protocols over wireless networks. It is the object of the present invention to improve a data transmission between a first node and a second node of a communication network.

The invention is defined by claims 1, 3 and 4. The object of the present invention is achieved by a method of providing a data transmission between a first node and a second node of a communication network via one or more links of the communication network, the method comprising the steps of: detecting a change of transmission conditions of the communication network whereby the said change has an effect on the data transmission which is being performed in accordance with a first protocol; triggered by the detected change, dynamically determining a second protocol as a protocol for the ongoing data transmission which is better adapted to the changed transmission conditions than the currently used first protocol, depending on one or more measures of quality of the data transmission and/or depending on one or more policies; coordinating, between the first node and the second node, a protocol switch from the first protocol to the second protocol; coordinately switching, at the first node and at the second node, from the first protocol to the second protocol while the data transmission is ongoing; and continuing the ongoing data transmission in accordance with the second protocol. Further, the object of the present invention is achieved by a first node of a communication network for providing a data transmission between the first node and a second node of the communication network via one or more links of the communication network, the first node comprising a protocol unit adapted to detect a change of transmission conditions of the communication network whereby the said change has an effect on the data transmission which is being performed in accordance with a first protocol; triggered by the detected change, dynamically determine a second protocol as a protocol for the ongoing data transmission which is better adapted to the changed transmission conditions than the currently used first protocol, depending on one or more measures of quality of the data transmission and/or depending on one or more policies; coordinate, between the first node and the second node, a protocol switch from the first protocol to the second protocol; and initiate a coordinate switching, at the first node and at the second node, from the first protocol to the second protocol while the data transmission is ongoing and a subsequent continuation of the ongoing data transmission in accordance with the second protocol. And the object of the present invention is also achieved by a computer program product for switching a protocol which controls a data transmission between a first node and a second node of a communication network via one or more links of the communication network, from a first protocol to a second protocol whereby the said protocol switch is performed while the data transmission is ongoing, whereby the computer program product, when executed by the first node, performs the steps of: detecting a change of transmission conditions of the communication network whereby the said change has an effect on the data transmission which is being performed in accordance with the first protocol; triggered by the detected change, dynamically determining the second protocol as a protocol for the ongoing data transmission which is better adapted to the changed transmission conditions than the currently used first protocol, depending on one or more measures of quality of the data transmission and/or depending on one or more policies; coordinating, between the first node and the second node, the protocol switch from the first protocol to the second protocol; and initiating a coordinate switching, at the first node and at the second node, from the first protocol to the second protocol and a subsequent continuation of the ongoing data transmission in accordance with the second protocol.

The question whether a first or a second protocol is better adapted for a data transmission under certain transmission conditions (i.e. a degree of an adaptation/suitability of a protocol to transmission conditions) may be assessed based on one or more measures of quality of the data transmission and/or based on one or more policies. The one or more measures of quality of the data transmission may comprise one or more Quality-of-Service (= QoS) parameters and one or more measures of a degree/efficiency of usage of network resources (e.g. data rate, processing power, energy consumption). The one or more policies may comprise a user policy defined by a user of a node, a manufacturer policy defined by a manufacturer of the node or an application running on the node, an operator policy defined by a network operator or by a network provider, etc.

For a decision whether a second protocol is better adapted for a data transmission than a first protocol, each of two different measures of quality preferably may be associated with a respective priority which defines which one of the two measures is considered to be more important. A priority scale may be provided by means of a policy. An example of a quality measure is a low energy consumption per time or per amount of transmitted data. A second protocol which has a lower energy consumption than a first protocol which has a higher energy consumption may be considered to be better adapted for a data transmission from the aspect of energy saving. Other examples of quality measures are a high data rate, a low packet loss rate, a low jitter, a high signal-to-noise ratio, a low bit error ratio, a high message throughput rate, etc.

One could imagine a case where the assessment of the suitability leads to the result that even under the changed transmission conditions the first protocol is a protocol which is better adapted for the ongoing data transmission than any other available protocol (i.e. the determined second protocol is equal to the first protocol). In this case, of course, one would not perform the protocol switch because it would be a switch between the same protocol, and thus redundant. Instead, one would continue the ongoing data transmission in accordance with the first protocol.

It is possible that the protocol switch involves a change of a communication protocol governing or controlling a transmission of data in a communication between a first node and a second node of a communication network from a first protocol to a second protocol whereby the said protocol change is performed while the communication is continued. A protocol may be a set of rules which is used by the nodes to communicate with each other across the network. A protocol may be a convention or standard that controls or enables a connection, a communication, and the data transmission between the nodes. In its simplest form, a protocol may be defined as the rules governing the syntax, semantics, and synchronization of the communication. A protocols may be implemented by hardware, software, or a combination of the two. At the lowest level, a protocol may define a behaviour of a hardware connection.

It is possible that a first step comprises receiving at the first node information about a change of transmission conditions affecting the on-going communication. A second step may comprise, in response to the said received information, determining by the first node the second protocol. A third step may comprise sending from the first node to the second node a notification about a planned change from the first protocol to the second protocol. A fourth step may comprise, in response to the received notification, sending an acknowledgment from the second node back to the first node. A fifth step may comprise switching at the first node and at the second node from the first protocol to the second protocol.

The invention provides for a dynamic protocol change from a first protocol mechanism to a second protocol mechanism on any layer of a hierarchically layered communication network at runtime. Thus, the invention provides a universal and dynamic protocol switch method for communication networks. By means of the protocol switch it is ensured that the data transmission through the network is adapted to changed transmission conditions by means of switching from a usage of a less efficient transport option to a usage of a more efficient transport option. The dynamic protocol selection may depend on any kind of quality measures related to a quality of data transmission and/or on policy control from any layer.

On the one hand the invention can implement a protocol switch between existing legacy protocols like TCP/UDP/SCTP (= Stream Control Transmission Protocol). On the other hand the invention can implement a protocol switch within a completely new future Internet architecture using protocols developed until then. The switching of protocols according to the invention is possible and important in the future Internet, where today we are far from protocol implementations yet. Unlike today's Internet wherein a communication stack cannot switch its transmission method - e.g. between UDP/TCP/SCTP - once the transmission is ongoing, an embodiment of the invention enables to identify a favourable or the best transmission method under the current transmission conditions, and in addition allows selecting this favourable transmission method dynamically and policy-based during transmission. By means of the protocol change, an improved connectivity between endpoints within one layer is established, compared to a connectivity before the protocol switch. By this method the protocol unit ensures that resources like links, paths, processing assets etc. are used in an optimal way, and thus an optimal connectivity is established.

The invention is applicable to any combination of hierarchically layered networks. The invention provides a connectivity service in a network domain concept. In a network architecture environment not all seven OSI layers may be present (OSI = Open System Interconnection). However information about the state of an underlying sub-domain or sub-layer is still available to manage the protocol mechanisms on the domain above autonomously with the involved nodes.

One example of a protocol switch between legacy protocols is a switch between UDP and TCP on a transport layer (OSI Layer 4) in the current Internet. Apart from a switch between TCP and UDP on Layer 4 according to the OSI model, also protocol switches on other layers of the OSI model are conceivable, e.g. switching on Layer 2 from a first RLC/LLC protocol to a second RLC/LLC protocol in a wireless access network (RLC = Radio Link Control; LLC = Logical Link Control). If there are different access technologies available at the node, also a switch from ATM to IP, Ethernet, frame relay or ISDN data transfer is possible (ATM = Asynchronous Transfer Mode; ISDN = Integrated Services Digital Network).

Depending on the underlying network technology - be it wire-line or wireless - on the data link layer different link control protocols are possible. These layer 2 protocols again can implement reliable transport using Automatic Repeat Request (ARQ) and Forward Error Correction (FEC) mechanisms. By switching between different protocols (e.g. Stop&Wait, Go Back N or other ARQ protocols and window based control mechanisms) at runtime, depending on various parameters like e.g. a QoS parameter describing a Quality of Service needed or an operator policy wanted, the usage of network resources can be improved.

Moreover depending on individual QoS parameters embodiments of the invention represent a method which optimises between a switch overhead connected with the protocol switch and the usage improvement of the network resources. Depending on the properties of the engaged links and the applied operator policies, a balance of transmission quality and control traffic overhead can be achieved and the proper usage of the scarce resources can be guaranteed.

Through embodiments of the invention, the problem of providing optimal connectivity inside a network is solved by just changing the protocol stack in the involved nodes. Thereby on the one hand the OSI model allows a change on just one layer, e.g. from TCP to SCTP, without affecting the other layers. However on the other hand the protocols are often intertwined and not operating on an exact OSI layer but in between two layers like MPLS does between Layer 2 and Layer 3 or ATM, also offering Layer 2 services (MPLS = Multi-Protocol Label Switching). In the latter case it might be needed that underlying parts of the stack also are switched. The proposed solution is scalable concerning the number of hops traversed as well as to the number of routes used in parallel between the involved nodes. Only end nodes are involved. This means it is also flexible and extensible to point to multipoint transmission.

Link quality changes or other changes in QoS parameters (processing load, delay, etc.), as well as failures, can be handled in an optimal and policy-based way by the described solution to provide an optimal resource usage and permit an optimal data transport between concerned nodes.

Further advantages are achieved by embodiments of the invention indicated by the dependent claims.

According to an embodiment of the invention, detecting the change of the transmission conditions comprises the steps of measuring one or more parameter values of one or more QoS parameters related to the data transmission and/or monitoring one or more transmission policies which apply to the data transmission; and indicating the change of the transmission conditions if one or more measured parameter values of at least one of the one or more QoS parameters or a value derived therefrom differ from a corresponding reference value in excess of a pre-determined threshold or if a pre-determined transmission property defined by the one or more transmission policies changes.

It is possible that the first node receives information related to a change of resources of the communication network which are available for the communication and/or information related to a change of one or more policies governing the communication. It is possible that the information related to a change of resources of the communication network is gathered by measuring a quality of a communication path used for the communication.

Parameter values of one or more QoS parameters may be measured with respect to the data transmission, e.g. measurements of a packet delay occurring with packets that are transmitted in the link used for the data transmission. According to an embodiment, this measurement is executed by a measurement unit associated with a network node involved in the data transmission, e.g. as a sending node or a receiving node of the data.

The measured parameter values may be sent, preferably by the measurement unit, to a protocol unit associated with the node. The PDU receives the measured parameter values, preferably from the measurement unit, and analyses them. If one or more currently measured parameter values of a certain QoS parameter significantly deviate from a corresponding reference value, e.g. a mean of a set of previously measured parameter values of the QoS parameter, this may be considered to indicate a change of the transmission properties, i.e. the transmission conditions. A significant change may be determined by means of a value derived from one or more measured parameter values, e.g. a mean value of the last five or ten measured parameter values. It is possible that a deviation is considered to be significant if a derived value associated with a QoS parameter differs from a corresponding pre-defined reference value in excess of a pre-defined threshold.

The change of the transmission conditions occurring in the network may be favourable or detrimental for the data transmission, e.g. the packet delay may have decreased (= favourable) or increased (= detrimental). In either case, a change of the transmission conditions is indicated, registered or noticed by the PDU, e.g. by setting a flag in a microprocessor of the node.

According to an embodiment of the invention, a QoS parameter of the one or more QoS parameters related to the data transmission is one or more of the following and any combination thereof: bandwidth (= data rate, e.g. measured in bit/s), packet loss rate, delay, jitter, signal-to-noise ratio (= SNR), bit error ratio, message throughput rate, call blocking probability, MOS (= Mean Opinion Score), peak throughput, mean throughput, mean processing power, mean memory usage, mean energy consumption.

According to an embodiment of the invention, dynamically determining the second protocol comprises the step of determining the second protocol as a protocol which effects, under the changed transmission conditions, a higher efficiency of usage of network resources by the ongoing data transmission than the currently used first protocol. Efficiency of usage of network resources may be measured by means of one or more QoS parameters.

According to an embodiment of the invention, dynamically selecting the second protocol comprises the steps of determining a set of one or more protocols which are usable for the ongoing data transmission over the at least one link; evaluating the one or more protocols with regard to one or more parameters characterising an efficiency of usage of network resources by the data transmission; and selecting a protocol from the evaluated one or more protocols which involves a higher efficiency of the data transmission than the first protocol with respect to at least one of the one or more parameters characterising an efficiency of usage of network resources by the data transmission, the said selected protocol representing the second protocol.

The PDU determines a set of one or more protocols which in principle could be used for the ongoing data transmission over the at least one link (set of potential protocols). The set of potential protocols may comprise the currently used first protocol because the PDU may find that even under the changed transmission conditions the first protocol remains the most favourable protocol when compared with the other available protocols. The PDU may retrieve a selection of available protocols for different layers from a database which is accessible by the PDU, either a local protocol database of the node or a global database implemented in and accessible from within the network. Current limitations of the data transmission may be taken into account for the preselection of the set of potential protocols by the PDU, such as transmission limitations and preferences associated with the node, a user policy or a policy of an operator or provider of the network. An example of a limitation associated with the node is a mobile phone which excludes a use of a wire-line protocol.

It is possible that determining by the first node the second protocol comprises selecting the second protocol from a set of available protocols dependent on information about a change of transmission conditions affecting the communication.

Possibly, the PDU assesses the one or more protocols with regard to the one or more parameters characterising an efficiency of usage of network resources by the data transmission. These one or more parameters are in the following also referred to as "efficiency parameters". The network resources may comprise network links, routing paths, and processing resources of the network (routers, routing nodes, nodes, terminals, etc.). An efficient usage of the network resources by the data transmission may be characterised by one or more of the following: a high data rate (e.g. resulting in an efficient use of the transmission capacity of the network link), a small delay of packets (e.g. resulting in a negligible delay in the processing of packets at the receiving node), a low energy consumption per time (e.g. resulting in a long lifetime of a rechargeable battery of a portable terminal involved in the data transmission; cf. WLAN vs. GSM/UMTS), a low packet loss rate (e.g. resulting in a negligible amount of the transmission capacity of the network link being used for retransmission of lost packets) (WLAN = Wireless LAN; LAN = Local Area Network; GSM = Global System for Mobile communications; UMTS = Universal Mobile Telecommunications System).

By usage of measurements and by evaluation of applicable policies the PDU may decide which protocol on which links may be used. The measurements can either be taken from links in use or by query from a node internal storage that has stored such data gathered former measurements. When assessing which one of the one or more potentially available protocols is the most appropriate protocol under the changed transmission conditions, it is also possible that the PDU takes into account policies (a user policy defined by a user of a node, a manufacturer policy defined by a manufacturer of the node or an application running on the node, an operator policy defined by a network operator or by a network provider, etc.) which are derived from a policy storage, e.g. on a SIM card (SIM = Subscriber Identity Module). These policies may restrict the selection among the one or more potentially available protocols to a subset of one or more protocols, e.g. depending on an availability or preference with regard to an access technology, interfaces, bandwidth, etc.

It is possible that the PDU assesses the one or more protocols with regard to an efficiency parameter by looking up, for each of the one or more protocols, a respective reference value related to the efficiency parameter. Then the PDU chooses the protocol which is associated with the most favourable reference value. The reference values of the efficiency parameter may be accessible in a data base where reference values associated with the different potential protocols are kept, e.g. measured values of efficiency parameters gathered from previous data transmissions through the network under different protocols or reference values added to the data base by a service provider or measured values from probing other connections, i.e. other data transmissions via links of the communication network.

It is possible that the PDU selects a protocol from the evaluated one or more protocols which involves a higher efficiency of the data transmission than any of the other one or more protocols with respect to one or more efficiency parameters. It is possible that a policy defines an efficiency parameter, e.g. energy consumption, which has the highest weight and that the PDU compares the performance of the one or more different protocols with respect to this priority parameter. Then the PDU selects the protocol from the evaluated one or more protocols which is characterised by the most favourable ("efficient") parameter values regarding the priority parameter, e.g. the protocol which consumes the least energy. Then, this selected protocol represents the said second protocol, which is the target protocol of the protocol change. It is also possible that a set of efficiency parameters is defined, each one with a specific weighting factor, and that the protocol of the one or more protocols is selected which performs best over the entirety of the weighted efficiency parameters. The weighting factors assigned to the set of efficiency parameters may be defined by a policy.

According to an embodiment, the one or more parameters characterising an efficiency of usage of network resources by the data transmission, i.e. the so-called efficiency parameters, comprise one or more of the following and any combination thereof: bandwidth, packet loss rate, delay, jitter, signal-to-noise ratio, bit error ratio, message throughput rate, call blocking probability, MOS (= Mean Opinion Score), mean processing power, mean memory usage,
,peak throughput, mean throughput, energy consumption per time or per amount of transmitted data.

It is possible that the PDU receives measured values of quality measures taken from other network paths in use. Via one or more of these paths in use data may be transported via the first protocol. Via one or more of these paths in use data may be transported via the second protocol. Based on the measured values from the other paths under the different protocols, the PDU can gather (statistical) information and assess the efficiency of usage of network resources under each of the protocols. When the PDU has to take a decision about which protocol is better adapted for the data transmission in the first link, the PDU can refer to reference values which have been derived from the measured values on the paths in use. The reference values provide the PDU with data which protocol may be better adapted under certain transmission conditions.

According to an embodiment, coordinating the protocol switch from the first protocol to the second protocol comprises the steps of sending from the first node to the second node a switch decision message comprising a definition of a point in time proposed for an execution of the protocol switch, in the following also referred to as "switch time", and in response to the received switch decision message, sending from the second node to the first node an acknowledgement message acknowledging the protocol switch at the proposed point in time. It is possible that the switch time is selected in dependence on a protocol state. As an example, a favourable protocol state for a protocol switch may be a point in time when all parts of a data block have been sent and a transmission of a subsequent data block has not yet started. It is also possible that a MBB mechanism or a soft handover is applied to the protocol switch (MBB = Make Before Break).

The coordination of the protocol switch from the first protocol to the second protocol may comprise a synchronization of clocks of processing systems of the first node and the second node by means of a timing synchronisation protocol, e.g. the Network Time Protocol (NTP).

According to an embodiment, coordinating the protocol switch and coordinately switching from the first protocol to the second protocol comprises the steps of sending from the first node to the second node a switch notification and request message comprising a notification that the first node has performed the protocol switch and a request to perform the protocol switch, and in response to the received switch notification and request message, performing the requested protocol switch by the second node. The switch notification and request message may be in accordance with the first protocol and may be sent by the first node before the first node switches to the second protocol. After sending the switch notification and request message, the first node continues the sending of data in accordance with the second protocol. Accordingly, the switch notification and request message notifies the second node that the first node has already switched to the second protocol and is currently sending data in accordance with the second protocol. After receiving the switch notification and request message, the second node also switches to the second protocol. However, because in a packet-based network a later sent packet may arrive earlier at a target node than an earlier sent packet, the protocol switch from the first to the second protocol at the second node may be performed in a MBB mechanism or a handover method so that the second node is still able to process a packet according to the first protocol which arrives at the second node during a certain, pre-defined period after the protocol change at the second node.

According to an embodiment, the PDU, triggered by the detected change, dynamically switches the data transmission from the first link to a second link and/or triggers an establishment of an additional link for the data transmission, and dynamically determines a protocol for controlling the data transmission via the second and/or additional link. The switching of the protocols can be combined with an addition of another possible transport path if such a path is available. In this case it is also possible to switch the layer 2 (link layer) protocol if other link technologies like ATM, frame relay, Ethernet, DSL or ISDN are available (DSL = Digital Subscriber Line).

According to an embodiment, the first link and the second and/or additional link of the communication network are based on different transmission technologies.

According to an embodiment, the data transmission in a layer N of the OSI model is supported by adding one or more paths in an underlying layer N-1 of the OSI model, with N = 1, ..., 7. A second and/or an additional link is always arranged on the same layer as the first link. However under the second link there may exist another technology and therefore another layer N-1.

According to an embodiment, the protocol is changed from a first protocol to a second protocol within one of the layers 1 to 7 according to the OSI model. It is possible that both the first protocol and the second protocol is associated with one of the layers 1 to 7 of the OSI model. It is possible that a new protocol stack is introduced in the first node and the second node when performing the protocol change.

According to an embodiment, more than two nodes can take part in the data transmission, i.e. the information exchange (multicast). It is possible that a data transmission is performed between the first node and two or more second nodes and that the protocol switch is performed by the first node and the two or more second nodes.

These as well as further features and advantages of the invention will be better appreciated by reading the following detailed description of exemplary embodiments taken in conjunction with accompanying drawings of which:
- Fig. 1: is a block diagram of network nodes communicating via a communication network; and
- Fig. 2: is a message sequence chart which specifies actions for performing a protocol switch, e.g. in the communication network of Fig. 1.

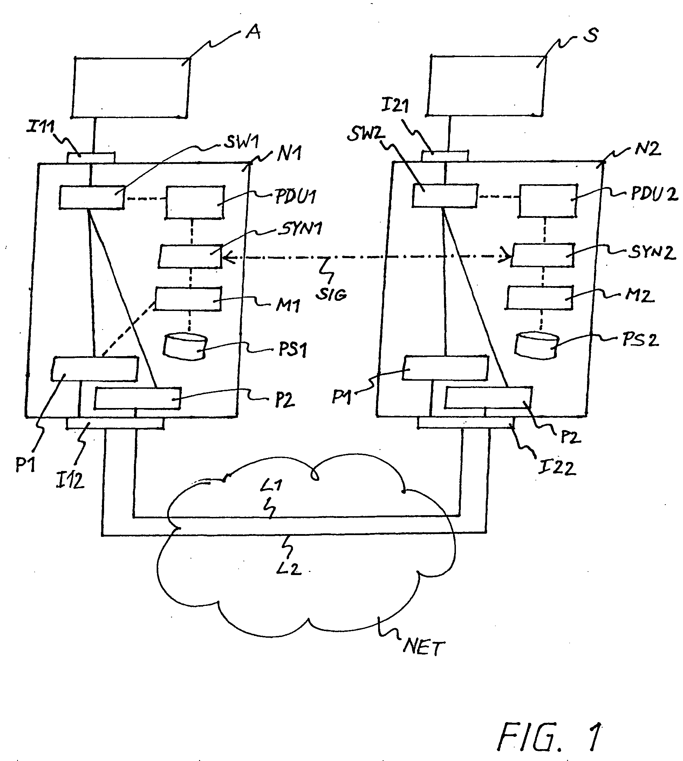

Fig. 1 schematically illustrates a first network node N1 and a second network node N2 which are connected through a communication network NET via a first link L1. Optionally, an additional link L2 may be activated (established) if needed. Alternative to a connection comprising two links L1, L2, only a single link or more than two links may be used as a connection between the first network node N1 and the second network node N2. The network NET is connected to the underlying connectivity domain of the first network node N1 via an interface I12 of the first node N1. The network NET is connected to the underlying connectivity domain of the second network node N2 via an interface I22 of the second node N2.

The network NET may be a wireless network, e.g. a network for mobile (wireless) communication, or a wire-line network, e.g. the Internet. Correspondingly, the links L1, L2 may be wireless links such as GSM, IS-95, CDMA2000, UMTS, CDMA, LTE, Bluetooth, IR, WLAN, or wire-line links such as Ethernet, DSL, ISDN, ATM, Frame Relay, LAN (IS = Interim Standard; CDMA = Code Division Multiple Access; LTE = Long Term Evolution; IR = Infrared).

In principle the connection of the nodes N1, N2 could also be delivered by more than two links over the network NET (parallel links inside a multipath network) or by just one link. Also of course there can be a whole network comprising the communication network NET in between the nodes N1, N2 and not just a direct connection. Each of the nodes N1, N2 comprises node internal connections which are within one processing system and facilitated by means of inter process communication.

The first node N1 comprises a protocol switch SW1 with a protocol storage unit (not shown) providing at least a first protocol P1 and a second protocol P2. In the first node N1, a change between the first protocol P1 and the second protocol P2 can be effected by means of the protocol switch SW1 of the first node N1. The first node N1 further comprises a protocol unit PDU1, a synchronisation module SYN1, a measurement unit M1 providing measurement values concerning data transmission links to the protocol unit PDU1, and a memory unit with a policy storage PS1. Likewise the second node N2 comprises a protocol unit (not shown) providing a first protocol P1 and a second protocol P2. In the second node N2, a change between the first protocol P1 and the second protocol P2 can be effected by means of a protocol switch SW2 of the second node N2. The second node N2 further comprises a protocol unit PDU2, a synchronisation module SYN2, a measurement unit M2 and a memory unit with a policy storage PS2. The nodes N1, N2 may be mobile terminals, e.g. mobile phones, mobile laptops, PDAs, etc. or stationary terminals, e.g. a PC or a computer-operated soft phone (PDA = Personal Digital Assistant; PC = Personal Computer). The first node N1 and the second node N2 may be subscribed to the telecommunications network NET, e.g., a packet-switched network.

The protocol unit PDU1, PDU2 is composed of one or several inter-linked computers, i.e., a hardware platform, a software platform basing on the hardware platform and several application programs executed by the system platform formed by the software and hardware platform. The functionality of the protocol unit PDU1, PDU2 is provided by the execution of these application programs. The application programs or a selected part of these application programs constitute a computer software product providing a call control service as described in the following, when executed on the system platform. Further, such computer software product is constituted by a storage medium storing these application programs or said selected part of application programs.

An application A is connected, by means of an interface I11, to the processing system of the first node N1. A server S is connected, by means of an interface I21, to the processing system of the second node N2. If a connection between the involved endpoints N1, N2 is to be established, besides a path selection a certain protocol mechanism out of a set of possible protocols is selected to ensure reliability and to provide flow control for the connection L1, L2.

The application A at node N1 requests to receive data from the server S at node N2. To facilitate the requested data transmission, the PDU1 of the first node N1 selects a suitable path (link) in combination with a suitable protocol from a set of available protocols. For the selection a set of stored policies (user policy and/or manufacturer policy and/or operator policy) stored in the policy storage PS1 as well as available measurements available from the measurement unit M1 can be applied.

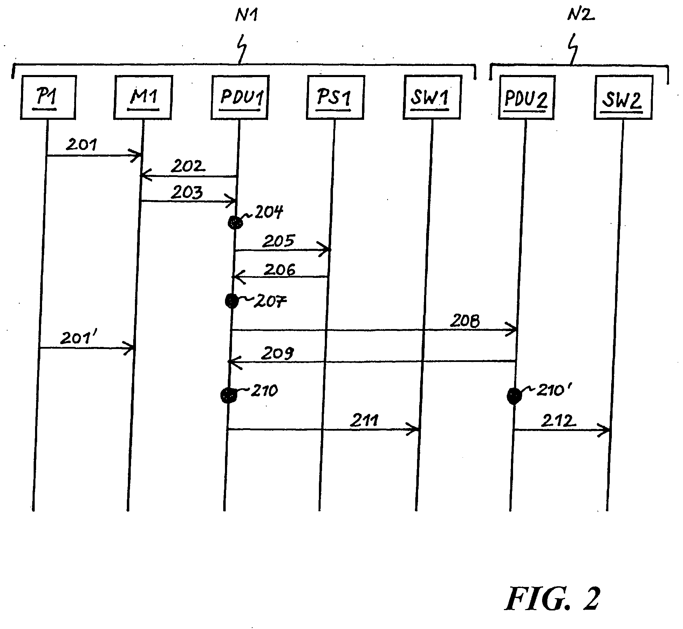

Fig. 2 is a message sequence chart detailing actions for performing a protocol switch, e.g. in the communication network of Fig. 1. Fig. 2 schematically illustrates the first node N1 and the second node N2, each with sub-units according to Fig. 1.

The communication setup between the node N1 and the node N2 uses a proposed first protocol P1 and a proposed path over a first link L1. If the conditions of the underlying link L1 or an underlying processing resource of the network N1 change during the ongoing data transmission between the first node N1 and the second Node N2 the chosen first protocol P1 can be changed accordingly. Moreover the protocol unit PDU1 can decide to add paths in an underlying N-1 domain and by that support a proper transmission of data in an N domain, whereby N = 1, ..., 7. These seven layers (N=7) exist only in the OSI model. In today's Internet mostly N=5, while effort is being made to reach N=4 in the future.

The measurement unit M1 periodically takes measurements 201, 201' of QoS parameters related to the data transmission according to the first protocol P1 in the first link L1. The protocol unit PDU1 of the first node N1 requests 202 recent measurements from the measurement unit M1. In response to the request 202, the measurement unit M1 sends 203 a set of recently measured values of QoS parameters to the protocol unit PDU1 of the first node N1.

From the received measured values 203 of QoS parameters, the protocol unit PDU1 of the first node N1 detects 204 that link resources for the ongoing data transmission over the link L1 have become worse, e.g. that a bandwidth available for the data transmission has decreased. It is also possible that the protocol unit PDU1 of the first node N1 detects that a new policy has come into effect. In either case, the protocol unit PDU1 of the first node N1 detects that the transmission conditions have changed (trigger).

For example, the data transmission is a transmission of video data over a UMTS network NET. The data transmission is performed according to the first protocol P1. At 23:00h a network provider of the UMTS network NET shuts off several base stations because the mean traffic during the night hours is significantly reduced. That means that cell sizes of the UMTS network NET increase and that the data transmission between the first node N1 and the second node N2 now has to be performed via a very distant base station because a closer base station that was used up to now has been shut down. Under the changed transmission conditions, it has to be expected that more packets get lost and that the energy consumption will increase. In other words, the parameter values of the QoS parameter "packet loss rate" is expected to increase. The same is true if a mobile user just moves further away from the base station he is connected to. Again this will raise the "packet loss rate" QoS parameter, and protocols may be adjusted or switched accordingly.

Triggered by the information that the transmission conditions have changed, the protocol unit PDU1 of the first node N1 determines whether another protocol and if an additional route would suite better for the ongoing transmission than the currently used first protocol P1.

The protocol unit PDU1 of the first node N1 consults the protocol storage unit PS1 to identify the potential protocols, i.e. the protocols that are basically available. The protocol storage unit lists two protocols, i.e. the first protocol P1 currently used and the second protocol. The protocol unit PDU1 requests 205 the policy storage PS1 to provide information whether any specifications exist which exclude the use of the available protocols P1, P2 under the changed transmission conditions. In response to the policy request 205, the policy storage PS1 sends 206 the currently valid policies (comprising a user policy) to the protocol unit PDU1 of the first node N1.

Also the protocol unit PDU1 of the first node N1 consults a measurement data base provided by the measurement unit M1 to identify which of the two available protocols P1, P2 can be expected to provide a better solution for the data transmission under the changed transmission conditions. Based on prior measurements, the protocol unit PDU1 may find that the data transmission under the second protocol P2 can be expected to have a slightly higher packet loss rate but a significantly lower energy consumption than under the first protocol P1.

According to a first example, with the current data transmission type (transmission of video data to a mobile phone) the user policy assigns a lower priority to the efficiency parameter "packet loss rate" than to the parameter "energy consumption". Since the energy consumption is lower under the second protocol P2 than under the first protocol P1, the protocol unit PDU1 of the first node N1 decides 206 that the second protocol P2 is better suited for the data transmission via the first link 1 under the changed transmission conditions.

According to a second example, the user policy assigns a higher priority to the efficiency parameter "packet loss rate" than to the parameter "energy consumption". Since the packet loss rate is higher under the second protocol P2 than under the first protocol P1, the protocol unit PDU1 of the first node N1 decides 206 that the first protocol P1 remains better suited for the data transmission via the first link 1, even under the changed transmission conditions. One can also think of a user policy which defines a more sophisticated priority scheme, e.g. taking into account different weight factors.

One simple embodiment is to switch to TCP in case of a lossy link L1 and to UDP otherwise. Additionally, the protocol unit PDU1 of the first node N1 may decide that an additional path L2 should be established, e.g. in order to compensate for a decreased bandwidth due to the changed transmission conditions.

This decision is conveyed 208 from the protocol unit PDU1 of the first node N1 to the protocol unit PDU2 at the remote end of the data transmission, i.e. at the second node N2. A signalling protocol must be used to convey the decision 208 of protocol switch to the other end N2. The switch decision message 208 which is sent from the protocol unit PDU1 of the first node N1 to the protocol unit PDU2 of the second node N2 comprises a specification of the second protocol P2 and a specification of a point in time tₛ indicating the time of switch when both sides N1, N2 switch to the new protocol P2. It is possible that both sides N1, N2 also add the new path L2 at the indicated time tₛ. In response to the received switch decision message 208, the protocol unit PDU2 of the second node N2 sends an acknowledgement message 209 to the protocol unit PDU1 of the first node N1. For the sake of security, the protocol unit PDU1 of the first node N1 will only initiate the protocol switch after it has received the acknowledgement message 209 from the protocol unit PDU2 of the second node N2. That means that the signalling message exchange 208 is acknowledged 209 and protected before the actual switch takes place.

The time tₛ may be set in the processing systems of both nodes N1, N2. Once the defined time tₛ has arrived 210, 210', the protocol unit PDU1 of the first node N1 triggers 211 the switch SW1 to change from the first protocol P1 to the second protocol P2, and synchronously the protocol unit PDU2 of the second node N2 triggers 212 the switch SW2 to change from the first protocol P1 to the second protocol P2. The protocol switch can be dynamically triggered by an event notification on both ends N1, N2 of the path L1.

After both ends N1, N2 have switched their communication protocol and/or path at the time tₛ, they continue with their data exchange.

This approach can be applied again whenever another change of the transmission conditions is determined. The sequence of messages shown in Fig. 2 is meant as an example to switch from a first protocol P1 to a second protocol P2 on a first link L1 when the transmission quality on link L1 decreases. After that sequence of signalling messages 201-212 the traffic is routed using the second protocol P2 on the first link L1 on both nodes N1, N2. The integrity and authenticity of the messages transferred between the nodes N1, N2 must be assured, e.g. by using a standards-based method like IPSec (= Internet Protocol Security) protocol.

## Claims

1. A method of providing a data transmission between a first node (N1) and a second node (N2) of a communication network (NET) via one or more links (L1, L2) of the communication network (NET), the method comprising the steps of:
detecting, by a protocol unit (PDU1) of the first node (N1), a change of transmission conditions of the communication network (NET), whereby the said change has an effect on the data transmission which is being performed in accordance with a first protocol (P1);
triggered by the detected change, dynamically determining, by the protocol unit (PDU1), a second protocol (P2) as a protocol for the data transmission which is better adapted to the changed transmission conditions than the first protocol (P1), depending on one or more measures of quality of the data transmission and/or depending on one or more policies;
coordinating, between the first node (N1) and the second node (N2), by the protocol unit (PDU1), a protocol switch from the first protocol (P1) to the second protocol (P2);
coordinately switching, at the first node (N1) and at the second node (N2), from the first protocol (P1) to the second protocol (P2) while the data transmission is ongoing;
continuing, by the first node (N1), the data transmission in accordance with the second protocol (P2);
triggered by the detected change, dynamically switching, by the protocol unit (PDU1), the data transmission from a first link (L1) of the one or more links (L1, L2) to a second link (L2) of the one or more links (L1, L2) and/or establishing, by the protocol unit (PDU1), an additional link (L2) for the data transmission; and
dynamically determining, by the protocol unit (PDU1), a protocol for controlling the data transmission via the second and/or additional link (L2),
**characterised in**
**that** the method further comprises the steps of:
supporting the data transmission in the second and/or additional link (L2) arranged in a layer N of the OSI, Open Systems Interconnection, model by adding one or more paths in an underlying layer N-1 of the OSI model, with N = 1, ..., 7.

2. The method of claim 1,
**characterised in**
**that** the first link (L1) and the second and/or additional link (L2) of the communication network (NET) are based on different transmission technologies.

3. A communication network (NET) comprising a first node (N1) and a second node (N2), for providing a data transmission between the first node (N1) and the second node (N2) via one or more links (L1, L2) of the communication network (NET), the first node (N1) comprising a protocol unit (PDU1) adapted to detect a change of transmission conditions of the communication network (NET), whereby the said
change has an effect on the data transmission in accordance with a first protocol (P1); triggered by the detected change, dynamically determine a second protocol (P2) as a protocol for the data transmission which is better adapted to the changed transmission conditions than the first protocol (P1), depending on one or more measures of quality of the data transmission and/or depending on one or more policies; coordinate, between the first node (N1) and the second node (N2), a protocol switch from the first protocol (P1) to the second protocol (P2); initiate a coordinate switching, at the first node (N1) and at the second node (N2), from the first protocol (P1) to the second protocol (P2) during the data transmission and a subsequent continuation of the ongoing data transmission in accordance with the second protocol (P2); dynamically switch, triggered by the detected change, the data transmission from a first link (L1) of the one or more links (L1, L2) to a second link (L2) of the one or more links (L1, L2) and/or trigger an establishment of an additional link (L2) for the data transmission; and dynamically determine a protocol for controlling the data transmission via the second and/or additional link (L2),
**characterised in**
**that** the protocol unit (PDU1) is further adapted to support the data transmission in the second and/or additional link (L2) arranged in a layer N of the OSI, Open Systems Interconnection, model by adding one or more paths in an underlying layer N-1 of the OSI model, with N = 1, ..., 7.

4. A computer program product comprising instructions for performing the method of claim 1.

## Patentansprüche

1. Verfahren zum Bereitstellen einer Datenübertragung zwischen einem ersten Knoten (N1) und einem zweiten Knoten (N2) eines Kommunikationsnetzes (NET) über einen oder mehrere Links (L1, L2) des Kommunikationsnetzes (NET), wobei das Verfahren die folgenden Schritte umfasst:
das Feststellen einer Veränderung der Übertragungsbedingungen des Kommunikationsnetzes (NET) durch eine Protokolleinheit (PDU1) des ersten Knotens (N1), wobei die besagte Veränderung Auswirkungen auf die Datenübertragung hat, die gemäß einem ersten Protokoll (P1) durchgeführt wird;
ausgelöst von der festgestellten Veränderung das durch die Protokolleinheit (PDU1) erfolgende, dynamische Bestimmen eines zweiten Protokolls (P2) als ein Protokoll für die Datenübertragung, das gemäß einer oder mehrerer Messungen der Qualität der Datenübertragung und/oder gemäß einer oder mehrerer Richtlinien besser als das erste Protokoll (P1) an die veränderten Übertragungsbedingungen angepasst ist;
das durch die Protokolleinheit (PDU1) zwischen dem ersten Knoten (N1) und dem zweiten Knoten (N2) erfolgende Koordinieren einer Protokoll-Umschaltung von dem ersten Protokoll (P1) zu dem zweiten Protokoll (P2);
das koordinierte, am ersten Knoten (N1) und am zweiten Knoten (N2) erfolgende Umschalten von dem ersten Protokoll (P1) zu dem zweiten Protokoll (P2), während die Datenübertragung fortgesetzt wird;
das durch den ersten Knoten (N1) Fortsetzen erfolgende Fortsetzen der Datenübertragung gemäß dem zweiten Protokoll (P2);
ausgelöst durch die festgestellte Veränderung das dynamische, durch die Protokolleinheit (PDU1) erfolgende Umschalten der Datenübertragung von einem ersten Link (L1) des einen oder der mehreren Links (L1, L2) zu einem zweiten Link (L2) des einen oder der mehreren Links (L1, L2) und/oder das Herstellen eines zusätzlichen Links (L2) für die Datenübertragung durch die Protokolleinheit (PDU1); und
das durch die Protokolleinheit (PDU1) erfolgende, dynamische Bestimmen eines Protokolls zur Steuerung der Datenübertragung über den zweiten und/oder zusätzlichen Link (L2).
**dadurch gekennzeichnet,**
**dass** das Verfahren weiterhin die folgenden Schritte umfasst:
das Unterstützen der Datenübertragung in dem zweiten und/oder zusätzlichen Link (L2), angeordnet in einer Schicht N des Open-System-Interconnection-Modells (OSI-Modell), durch das Hinzufügen eines oder mehrerer Pfade in einer unterliegenden Schicht N-1 des OSI-Modells mit N = 1, ..., 7.

2. Verfahren nach Anspruch 1, **dadurch gekennzeichnet, dass** der erste Link (L1) und der zweite und/oder zusätzliche Link (L2) des Kommunikationsnetzes (NET) auf unterschiedlichen Übertragungstechnologien beruhen.

3. Kommunikationsnetz (NET) mit einem ersten Knoten (N1) und einem zweiten Knoten (N2) für das Bereitstellen einer Datenübertragung zwischen dem ersten Knoten (N1) und dem zweiten Knoten (N2) über einen oder mehrere Links (L1, L2) des Kommunikationsnetzes (NET), wobei der erste Knoten (N1) eine Protokolleinheit (PDU1) umfasst, die ausgelegt ist für das Feststellen einer Veränderung der Übertragungsbedingungen des Kommunikationsnetzes (NET), wobei die besagte Veränderung sich auf die Datenübertragung gemäß einem ersten Protokoll (P1) auswirkt; für das von der festgestellten Veränderung ausgelöste, dynamische Bestimmen eines zweiten Protokolls (P2) als ein Protokoll für die Datenübertragung, das gemäß einer oder mehrerer Messungen der Qualität der Datenübertragung und/oder gemäß einer oder mehrerer Richtlinien besser an die veränderten Übertragungsbedingungen angepasst ist als das erste Protokoll (P1); für das Koordinieren des ersten Knotens (N1) und des zweiten Knotens (N2) für eine Protokoll-Umschaltung von dem ersten Protokoll (P1) auf das zweite Protokoll (P2); für das Einleiten eines koordinierten Umschaltens am ersten Knoten (N1) und am zweiten Knoten (N2) von dem ersten Protokoll (P1) auf das zweite Protokoll (P2) während der Datenübertragung und für eine anschließende Fortsetzung der ununterbrochenen Datenübertragung gemäß dem zweiten Protokoll (P2); für das dynamische, von der festgestellten Veränderung ausgelöste Umschalten der Datenübertragung von einem ersten Link (L1) des einen oder der mehreren Links (L1, L2) zu einem zweiten Link (L2) des einen oder der mehreren Links (L1, L2) und/oder für das Auslösen des Herstellens eines zusätzlichen Links (L2) für die Datenübertragung; und für das dynamische Bestimmen eines Protokolls zur Steuerung der Datenübertragung über den zweiten und/oder den zusätzlichen Link (L2),
**dadurch gekennzeichnet, dass** die Protokolleinheit (PDU1) weiterhin ausgelegt ist für das Unterstützen der Datenübertragung in dem zweiten und/oder zusätzlichen Link (L2), angeordnet in einer Schicht N des OSI-Modells, durch das Hinzufügen eines oder mehrerer Pfade in einer unterliegenden Schicht N-1 des OSI-Modells mit N = 1, ..., 7.

4. Computerprogramm-Produkt mit Anweisungen zum Ausführen des Verfahrens gemäß Anspruch 1.

## Revendications

1. Procédé destiné à assurer une transmission de données entre un premier noeud (N1) et un deuxième noeud (N2) d'un réseau de communication (NET) via une ou plusieurs liaisons (L1, L2) du réseau de communication (NET), le procédé comprenant les étapes suivantes :
détecter, par une unité de protocole (PDU1) du premier noeud (N1), un changement des conditions de transmission du réseau de communication (NET), ledit changement ayant un effet sur la transmission de données qui est en cours d'exécution selon un premier protocole (P1) ;
sur détection du changement, déterminer dynamiquement, par l'unité de protocole (PDU1), un deuxième protocole (P2) en tant que protocole de transmission de données mieux adapté aux conditions de transmission modifiées que le premier protocole (P1), en fonction d'une ou de plusieurs mesures de la qualité de la transmission de données et/ou en fonction d'une ou de plusieurs politiques ;
coordonner, entre le premier noeud (N1) et le deuxième noeud (N2), par l'unité de protocole (PDU1), un basculement de protocole du premier protocole (P1) vers le deuxième protocole (P2) ;
basculer de façon coordonnée, au niveau du premier noeud (N1) et au niveau du deuxième noeud (N2), du premier protocole (P1) vers le deuxième protocole (P2) alors que la transmission de données est en cours ;
continuer, par le premier noeud (N1), la transmission de données selon le deuxième protocole (P2) ;
sur détection du changement, basculer dynamiquement, par l'unité de protocole (PDU1), la transmission de données d'une première liaison (L1) parmi la ou les liaisons (L1, L2) vers une deuxième liaison (L2) parmi la ou les liaisons (L1, L2) et/ou établir, par l'unité de protocole (PDU1), une liaison supplémentaire (L2) pour la transmission de données ; et
déterminer dynamiquement, par l'unité de protocole (PDU1), un protocole pour contrôler la transmission de données via la deuxième liaison et/ou la liaison supplémentaire (L2),
**caractérisé en ce que** le procédé comprend en outre les étapes suivantes :
prendre en charge la transmission de données sur la deuxième liaison et/ou la liaison supplémentaire (L2) organisée dans une couche N du modèle d'interconnexion de systèmes ouverts OSI (Open Systems Interconnection) en ajoutant un ou plusieurs chemins dans une couche sous-jacente N-1 du modèle OSI, N étant un chiffre de 1 à 7.

2. Procédé selon la revendication 1, **caractérisé en ce que** la première liaison (L1) et la deuxième liaison et/ou la liaison supplémentaire (L2) du réseau de communication (NET) sont basées sur des technologies de transmission différentes.

3. Réseau de communication (NET) comprenant un premier noeud (N1) et un deuxième noeud (N2), destiné à assurer une transmission de données entre le premier noeud (N1) et le deuxième noeud (N2) via une ou plusieurs liaisons (L1, L2) du réseau de communication (NET), le premier noeud (N1) comprenant une unité de protocole (PDU1) adaptée pour détecter un changement des conditions de transmission du réseau de communication (NET), ledit changement ayant un effet sur la transmission de données selon un premier protocole (P1) ; sur détection du changement, déterminer dynamiquement un deuxième protocole (P2) en tant que protocole de transmission de données mieux adapté aux conditions de transmission modifiées que le premier protocole (P1), en fonction d'une ou de plusieurs mesures de la qualité de la transmission de données et/ou en fonction d'une ou de plusieurs politiques ; coordonner, entre le premier noeud (N1) et le deuxième noeud (N2), un basculement de protocole du premier protocole (P1) vers le deuxième protocole (P2) ; lancer un basculement coordonné, au niveau du premier noeud (N1) et au niveau du deuxième noeud (N2), du premier protocole (P1) vers le deuxième protocole (P2) pendant la transmission de données et par la suite une poursuite de la transmission de données en cours selon le deuxième protocole (P2) ; basculer dynamiquement, sur détection du changement, la transmission de données d'une première liaison (L1) parmi la ou les liaisons (L1, L2) vers une deuxième liaison (L2) parmi la ou les liaisons (L1, L2) et/ou déclencher l'établissement d'une liaison supplémentaire (L2) pour la transmission de données ; et déterminer dynamiquement un protocole pour contrôler la transmission de données via la deuxième liaison et/ou la liaison supplémentaire (L2),
**caractérisé en ce que** l'unité de protocole (PDU1) est en outre adaptée pour prendre en charge la transmission de données sur la deuxième liaison et/ou la liaison supplémentaire (L2) organisée dans une couche N du modèle d'interconnexion de systèmes ouverts OSI (Open Systems Interconnection) en ajoutant un ou plusieurs chemins dans une couche sous-jacente N-1 du modèle OSI, N étant un chiffre de 1 à 7.

4. Produit-programme informatique comprenant des instructions pour réaliser le procédé selon la revendication 1.
